**Europäisches Patentamt**

**European Patent Office**

**Office européen des brevets**

(19)

(11) Veröffentlichungsnummer : **0 327 799 B1**

(12)

# EUROPÄISCHE PATENTSCHRIFT

(45) Veröffentlichungstag der Patentschrift :
**01.04.92 Patentblatt 92/14**

(51) Int. Cl.$^5$ : **B03C 3/70,** B03C 3/68,
F01N 3/02

(21) Anmeldenummer : **89100137.2**

(22) Anmeldetag : **05.01.89**

(54) **Verfahren zum Abbrennen von Staub in einem elektrostatischen Staubabscheider sowie entsprechender Staubabscheider.**

(30) Priorität : **12.02.88 DE 3804385**

(43) Veröffentlichungstag der Anmeldung :
**16.08.89 Patentblatt 89/33**

(45) Bekanntmachung des Hinweises auf die
Patenterteilung :
**01.04.92 Patentblatt 92/14**

(84) Benannte Vertragsstaaten :
**ES FR GB IT**

(56) Entgegenhaltungen :
**DE-A- 3 035 206**
**DE-A- 3 305 601**

(73) Patentinhaber : **KNECHT Filterwerke GmbH**
**Haldenstrasse 48**
**W-7000 Stuttgart 50 (DE)**

(72) Erfinder : **Bilz, Siegfried**
**Fritz von Graevenitz-Strasse 29/1**
**W-7016 Gerlingen (DE)**
Erfinder : **Schilling, Wolfgang**
**Eberhardstrasse 2**
**W-7050 Waiblingen 4 (DE)**

(74) Vertreter : **Dipl.-Phys.Dr. Manitz Dipl.-Ing.**
**Finsterwald Dipl.-Ing. Grämkow Dipl.-Chem.Dr.**
**Heyn Dipl.-Phys. Rotermund Morgan,**
**B.Sc.(Phys)**
**Seelbergstrasse 23/25**
**W-7000 Stuttgart 50 (DE)**

EP 0 327 799 B1

## Beschreibung

Die Erfindung betrifft ein Verfahren zum Abbrennen von Staub, insbesondere von Ruß oder sonstigen brennbarenn und elektrisch leitenden Stäuben, in einem elektrostatischen Staubabscheider mit einer Elektrodenanordnung, welche zur Erzeugung eines von staub- bzw rußhaltigen Abgasen - insbesondere zur Agglomeration von Stauß bzw. rußteilchen - durchströmten elektrischen Feldes in einer vom Abgas durchsetzten Kammer angeordnet ist, deren Wandung als Elektrode der einen Polarität geschaltet sein kann, und deren Elekroden entgegengesetzter Polarität durch Isolatoren voneinander getrennt sind, von denen anhaftender Staub diskontinuierlich abbrennbar ist.

Außerdem bezieht sich die Erfindung auf für das Verfahren besonders geeignete Staubabscheider.

Staubabscheider, welche sich zur Rußabscheidung in Kraftfahrzeugen mit Dieselmotoren eignen, sind grundsätzlich bekannt. Dabei werden die Rußteilchen in einer Wirbelkammer Einfluß unter dem Einfluß eines elektrischen Feldes zu größeren Partikeln agglomeriert, welche dann in einem der Wirbelkammer nachgeschalteten Zentrifugalabscheider abgefangen werden können. Die zur Erzeugung des elektrischen Feldes in der Wirbelkammer dienenden Elektrodenanordnungen sind mit einer elektrischen Gleichspannungsquelle verbunden, die eine sehr hohe elektrische Potentialdifferenz aufrechtzuerhalten gestattet. Bei diesen Staubabscheidern sind die Isolatoren problematisch, welche zur Halterung der Elektrodenanordnungen in der Wirbelkammer dienen und Elektroden der einen Polarität von den Elektroden der anderen Polarität bzw. der mit der anderen Polarität verbundenen Kammerwand trennen. Sobald nämlich die Isolatoren durch stärkeren Rußanfalll verschmutzen, wird ein elektrisch leitender Verbindungsweg zwischen Bauteilen unterschiedlicher Polarität gebildet, mit der Folge, daß das mit den Elektrodenanordnungen erzeugte elektrische Feld zusammenbricht.

Um die Isolatoren reinigen zu können, kann gemäß der DE-A 33 05 601 im Isolatormaterial eine Widerstandsheizung eingebettet sein, welche es gestattet, die Isolatoren auf eine sehr hohe Temperatur, beispielsweise 700°C, zu erhitzen, um denn Rußbelag auf den Isolatoren abzubrennen. Dies ist möglich, weil die Abgase einen hinreichenden Restanteil von Sauerstoff mitführen, jedoch insofern nachteilig, als die Aufheizung der Isolatoren verhältnismäßig langwierig ist und eine hohe elektrische Leistung erfordert. Hinzu kommt, daß die Isolationseigenschaften mit zunehmender Temperatur verschlechtert werden. Deshalb muß nach dem Abbrand des Rußbelages gegebenenfalls noch eine gewisse Zeit zur Abkühlung der Isolatoren verstreichen, bevor wieder das zur Agglomeration der Rußteilchen notwendige elektrische Feld in der Wirbelkammer erzeugt werden kann.

Während der Zeit des Abbrandess des Rußbelages und der nachfolgenden Abkühlphase der Isolatoren kann die Wirbelkammer nicht verwendet werden, d.h. die rußhaltigen Abgase müssen durch eine parallel angeordnete Wirbelkammer geleitet werden. Da insbesondere während der Startphase eines Dieselmotors oder bei hoher Belastung desselben große Rußmengen anfallen, kann die Leistungsfähigkeit des Staubabscheiders aufgrund der Verschmutzungen der Isolatoren stark beeinträchtigt werden.

Aus der DE-A 36 22 623 ist es bekannt, den Rußbelag auf Filtern u.dgl. durch elektrischen Stromfluß durch die Rußpartikel zu entfernen, wobei der Ruß als elektrischer Leiter, d.h. als Heizleiter dient. Durch Steuerung des den Ruß durchsetzenden elektrischen Stromes soll die Bildung von Lichtbögen verhindert werden, weil deren hohe Temperatur zu Schäden an den Filtern u.dgl. führen kann. Im übrigen ist es aus dieser Druckschrift auch bekannt, abbgeschiedenen Ruß bei Bedarf mittels Mikrowellen bis zur Zündtemperatur aufzuheizen.

Nach der DE-A 30 35 206 kann der Rußanteil in Abgasen dadurch vermindert werden, daß dieselben einem elektrischen Wechselfeld bzw. einem pulsierenden elektrischen Feld ausgesetzt werden. Dabei wird der Effekt ausgenutzt, daß grobe Rußteilchen unter dem Einfluß des wechselnden bzw. pulsierenden elektrischen Feldes in kleinere Rußpartikel umgewandelt werden. Um zu vermeiden, daß sich auf den Elektroden, die zur Erzeugung des elektrischen Feldes dienen, Ruß ablagert, soll im Bereich der Elektroden ein hoher Luftdurchsatz aufrechterhalten werden, d.h. eventuell an den Elektroden anhaftende Rußteilchen sollen weggeblasen werden.

Aufgabe der Erfindung ist es nun, für einen elektrostatischen Staubabscheider der eingangs angegebenen Art eine schnell durchführbare Reinigung der Isolatoren bei geringem Leistungsbedarf zu ermöglichen. Diese Aufgabe wird dadurch gelöst, daß der Staub bzw. Ruß durch Erzeugung von Lichtbögen zwischen den von Isolatoren getrennten Elektroden unterschiedlicher Polarität abgebrannt wird, wobei die Lichtbögen mittels eines pulsierenden elektrischen Stromes, insbesondere Gleichstromes, unterhalten werden.

Die Erfindung beruht auf dem allgemeinen Gedanken, durch Unterhaltung eines Lichtbogens mit pulsierenden Strömen extrem hohe Temperaturen zu erzielen. Damit kann der Rußbelag der Isolatoren innerhalb kürzester Zeitspannen abgebrannt werden, wobei als weiterer Vorteil hinzukommt, daß der Lichtbogen mit geringer Leistung aufrechterhalten werden kann, denn die Reaktion zwischen dem Rußbelag und dem Restsauerstoff im Abgas verläuft exotherm.

Die extrem hohen Lichtbogentemperaturen dürften darauf zurückzuführen sein, daß die Pulsationen des den Lichtbogen unterhaltenden Stromes in den Atomen und Molekülen des Rußbelages angeregte Zustände

2

erzeugen, so daß die Elektronen innerhalb der Atome bzw. Moleküle weniger fest gebunden werden. Darüber hinaus werden die Elektronen, Atome und Moleküle zu Schwingungen angeregt. Dadurch wird einerseits der Ionisationsgrad der Materie innerhalb des Lichtbogens erhöht, andererseits steigt auch die Zahl der Stöße zwischen Atomen, Molekülen und Elementarteilchen an. Alle diese Effekte haben zur Folge, daß Reaktionen zwischen den Sauerstoffresten im Abgas und den Rußbestandteilen mit erhöhter Geschwindigkeit und bei erhöhter Temperatur erfolgen.

Es hat sich als vorteilhaft herausgestellt, wenn die Pulsationen ein breitbandiges Spektrum bzw. ausgeprägte Oberwellen aufweisen. Offenbar wirken die von Pulsationen unterschiedlicher Frequenz erzeugten unterschiedlichen Bewegungen bzw. Schwingungen von Molekülen, Atomen, Ionen bzw. Elementarteilchen im Sinne einer Reaktionsbeschleunigung zusammen.

Des weiteren ist vorteilhaft, wenn die Pulsationen eine ausgeprägte Amplitude besitzen.

Gemäß einer bevorzugten Ausführungsform der Erfindung sollen die Elektroden mit einer kurzschlußfesten elektrischen Speiseschaltung verbunden sein, welche bei hohem elektrischen Widerstand zwischen Elektroden entgegengesetzt elektrischer Polarität bzw. bei geringer oder verschwindender Last als Gleichspannungsquelle arbeiten und zwischen den Elektroden eine hohe elektrische Potentialdifferenz aufrechterhält, bei abfallendem oder verschwindendem elektrischen Widerstand bzw. bei hoher Last jedoch als pulsierende Stromquelle arbeitet und zwischen den Elektroden eine deutlich verminderte elektrische Potentialdifferenz zur Unterhaltung des Lichtbogens aufrechterhält.

Dieses Betriebsverhalten kann beispielsweise dadurch erreicht werden, daß eine Wechselspannungsquelle eine ausgangsseitig mit den Elektroden verbundene Gleichrichter- und Spannungsvervielfacherstufe speist, deren Kondensatoren eine so geringe Kapazität aufweisen, daß die die Gleichrichter- und Spannungsvervielfacherstufe speisende Wechselspannung eine Pulsation der ausgangsseitigen Spannung bewirkt, wenn ausgangsseitig der Gleichrichter- und Spannungsvervielfacherstufe eine große Last, d.h. ein Stromweg mit geringem Widerstand, angeschlossen ist.

Gegebenenfalls kann zusätzlich zu dem durch pulsierenden Strom unterhaltenen Lichtbogen auch eine Mikrowellenbeheizung zum Abbrennen der Verschmutzungen an den Isolatoren dienen.

Im übrigen wird hinsichtlich bevorzugter Merkmale der Erfindung auf die Ansprüche sowie die nachfolgende Erläuterung einer besonders vorteilhaften Ausführungsform anhand der Zeichnung verwiesen.

Dabei zeigt

Fig. 1 einen Längsschnitt einer Wirbelkammer mit Elektrodenanordnung zur Agglomeration von Rußteilchen,

Fig. 2 ein Blockschaltbild der Speiseschaltung für die Elektrodenanordnung und

Fig. 3 ein Diagramm, welches die Spannung an den Elektroden wiedergibt.

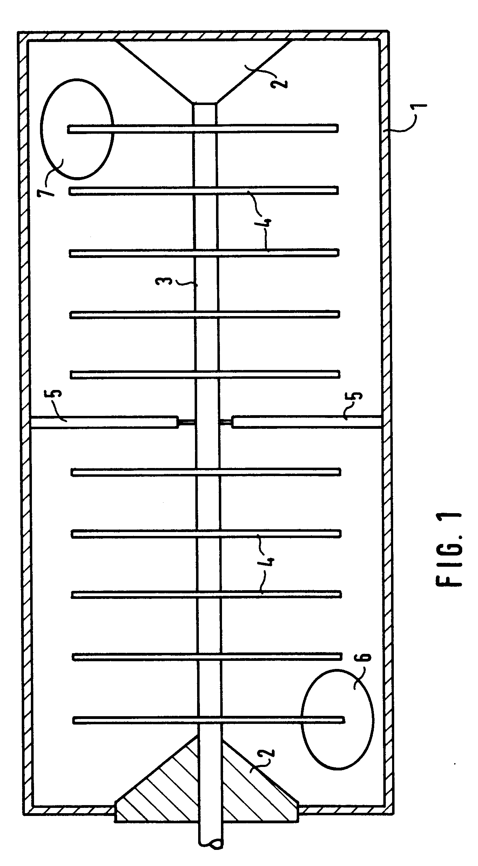

Die in Fig. 1 dargestellte Wirbelkammer besitzt ein zylindrisches Metallgehäuse 1, an dessen Stirnenden Isolatoren 2 angeordnet sind, die ihrerseits eine Metallstange 3 mit kreisscheibenförmigen Elektroden 4 tragen. Die Stange 3 ist in ihrem mittleren Bereich über weitere Isolatoren 5 gegenüber dem Metallgehäuse 1 abgestützt. Über eine im einen Isolator 2 angeordnete Zuleitung können die Stange 3 sowie die Elektroden 4 mit dem einen Pol einer Spannungsquelle verbunden werden. Der andere Pol derselben ist mit dem Metallgehäuse 1 verbunden, d.h. das Metallgehäuse 1 bildet zu den Elektroden 4 der einen Polarität eine Elektrode der anderen Polarität.

Die Wirbelkammer wird von rußhaltigen Abgasen durchströmt, welche durch eine Eingangsöffnung 6 im Bereich des einen Endes des Metallgehäuses 1 tangential zur Stange 3 zugeführt und über eine im Bereich des anderen Endes des Metallgehäuses 1 angeordnete Ausgangsöffnung 7 tangential zur Stange 3 abgeführt werden.

Unter dem Einfluß des zwischen den Elektroden 4 und dem Gehäuse 1 erzeugten elektrischen Feldes werden die Rußteilchen zu größeren Partikeln agglomeriert, so daß der Ruß in einem der Wirbelkammer nachgeschalteten Zyklon oder Fliehkraftabscheider abgefangen werden kann.

Bei starkem Rußanfall verschmutzen die Isolatoren 2 bzw. 5. Da die Rußschicht auf den Isolatoren 2, 5 elektrisch leitend ist, wird durch den Rußbelag ein Strompfad zwischen der Stange 3 bzw. den Elektroden 4 und dem Metallgehäuse 1 geschaffen. Gleichzeitig fällt die elektrische Spannung zwischen den Elektroden 4 bzw. der Stange 3 und dem Metallgehäuse 1 stark ab, beispielsweise von zuvor über 15 000 V auf ca. 1 000 V. Darüber hinaus bildet sich auf den verschmutzten Isolatoren ein Lichtbogen aus.

Erfindungsgemäß ist nun vorgesehen, diesen Lichtbogen zu unterhalten, wobei zwischen Gehäuse 1 und den Elektroden 4 bzw. der Stange 3 eine mit hoher Frequenz pulsierende elektrische Spannung aufrechterhalten wird. Die Pulsationsfrequenz liegt bei mehr als 5 kHz. Grundsätzlich ist es vorteilhaft, wenn die Pulsationsfrequenz bei noch höheren Werten, beispielsweise oberhalb von 10 kHz liegt. Jedoch ist zu berücksichtigen, daß bei derart hohen Pulsationsfrequenzen besondere Maßnahmen getroffen werden müssen.

Aufgrund der pulsierenden Versorgungsspannung entwickeln die Lichtbögen an den Isolatoren 2, 5 außerordentlich hohe Temperaturen, mit der Folge, daß die Rußverschmutzungen in kürzester Zeit abbrennen. Darüber hinaus ist vorteilhaft, daß zur Unterhaltung der Lichtbögen nur relativ geringe elektrische Leistung notwendig ist.

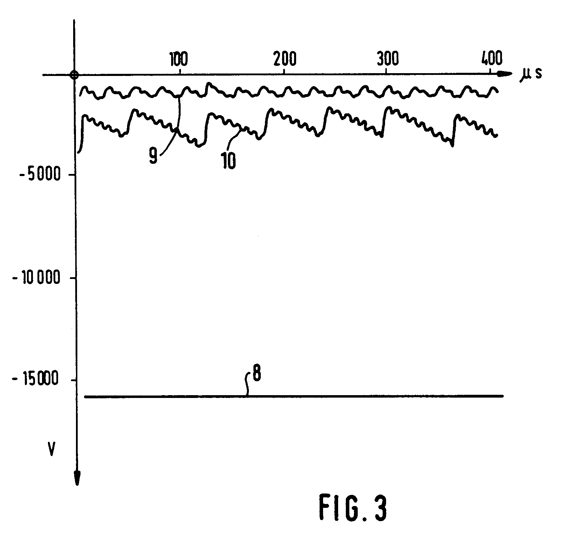

Aus Fig. 3 ist ersichtlich, welche elektrischen Spannungen bzw. Potentialdifferenzen zwischen dem Gehäuse 1 und den Elektroden 4 vorliegen.

Solange die Isolatoren 2 und 5 frei von Rußverschmutzungen sind, liegen die Elektroden 4 gegenüber dem Gehäuse 1 auf einer stark negativen Spannung von beispielsweise -15 900 V, vgl. die Kurve 8 in Fig. 3. Dieser Betriebszustand ist angenähert statisch, da zwischen den Elektroden 4 und dem Metallgehäuse 1 nur ein sehr schwacher Strom fließt, welcher durch Gasentladungen u.dgl. hervorgerufen wird.

Bei stärkeren Rußverschmutzungen der Isolatoren 2 und 5 bilden sich auf diesen Isolatoren Strompfade mit geringen elektrischen Widerständen. Dementsprechend fällt die elektrische Spannung zwischen den Elektroden 4 und dem Metallgehäuse 1 stark ab, gleichzeitig bilden sich Lichtbögen, die durch den nunmehr zwischen den Elektroden 4 und dem Gehäuse 1 fließenden stärkeren elektrischen Strom aufrechterhalten werden. Dabei ist erfindungsgemäß vorgesehen, den die Lichtbögen unterhaltenden elektrischen Strom bzw. die zwischen Gehäuse 1 und den Elektroden 4 vorliegende elektrische Spannung gemäß Kurve 9 in Fig. 3 mit hoher Frequenz pulsieren zu lassen, um Lichtbögen besonders hoher Temperatur zu erzeugen und damit die Rußverschmutzungen an den Isolatoren 2 und 5 besonders schnell abzubrennen.

Aufgrund des Abbrandes der Rußverschmutzungen nimmt der elektrische Widerstand der durch die Rußverschmutzungen gebildeten Strompfade zu, wodurch die elektrische Spannung zwischen dem Gehäuse 1 und den Elektroden 4 wiederum ansteigt. Aufgrund der veränderten elektrischen Widerstände können sich auch die Formen der Pulsationen ändern. Die Kurve 10 in Fig. 3 zeigt einen beispielhaften Verlauf.

Nach vollständigem Abbrand der Rußverschmutzungen stellt sich wiederum der ursprüngliche, annähernd statische Zustand entsprechend der Kurve 8 in Fig. 3 ein.

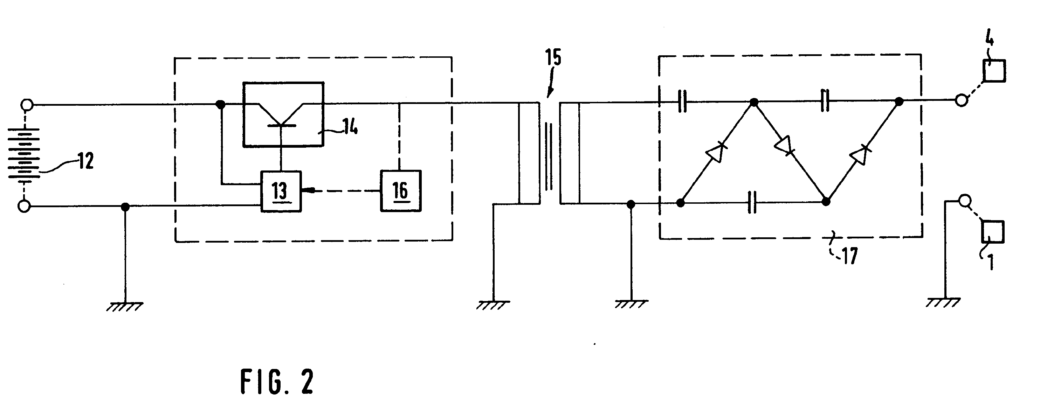

In Fig. 2 ist ein Beispiel einer Speiseschaltung für die Versorgung der Elektroden 4 mit elektrischer Spannung bzw. elektrischem Strom schematisiert wiedergegeben.

Zunächst wird mittels einer Gleichstromquelle, z.B. einer Batterie 12, ein hochfrequenter Wechselstrom erzeugt. Die Gleichstromquelle bzw. Batterie 12 treibt dazu einen Taktgeber 13, welcher seinerseits ein Leistungsteil 14 steuert, beispielsweise einen Leistungstransistor. Das Leistungsteil 14 liegt in Reihe mit der Primärseite eines Hochfrequenztransformators 15, welcher dementsprechend von Stromimpulsen entsprechend der Frequenz des Taktgebers 13 durchflossen wird. Gegebenenfalls kann der Taktgeber 13 durch eine Regelungseinheit 16 gesteuert werden, welche eingangsseitig auf die die Primärseite des Hochfrequenztransformators 15 beaufschlagenden Stromimpulse reagiert und ausgangsseitig die Frequenz und/oder die Impulsform des Taktgebers 13 steuert.

Wichtig ist, daß der Taktgeber 13 mit einer sehr hohen Frequenz, oberhalb von 5 kHz, arbeitet.

Sekundärseitig ist der Hochfrequenztransformator 15 mit einer Gleichrichter- und Spannungsvervielfacherstufe 17 verbunden, deren negativer Ausgang mit den Elektroden 4 und deren Masse-Ausgang mit dem Gehäuse 1 verbunden sind.

Bei entsprechender Bemessung der Kapazität der Kondensatoren der Gleichrichter- und Spannungsvervielfacherstufe 17 wird bei geringer bzw. verschwindender ausgangsseitiger Last eine sehr hohe Gleichspannung erzeugt, vgl. die Kurve 8 in Fig. 3.

Sobald die ausgangsseitige Last an der Gleichrichter- und Spannungsvervielfacherstufe 17 aufgrund von Verschmutzungen der Isolatoren 2 und 5 ansteigt, weil der elektrische Widerstand der Stromwege zwischen den Elektroden 4 und dem Metallgehäuse 1 abfällt, fällt die Ausgangsspannung der Gleichrichterund Spannungsvervielfacherstufe 17 ab. Aufgrund der begrenzt bemessenen elektrischen Kapazität der Kondensatoren der Stufe 17 wird die Ausgangsspannung dieser Stufe nicht mehr exakt geglättet, vielmehr wird eine pulsierende Ausgangsspannung erzeugt, wobei die Pulsationsfrequenz von Frequenzen des Taktgebers 13, des Leistungsteiles 14, des Hochfrequenztransformators 15 sowie der Gleichrichter- und Spannungsvervielfacherstufe 17 abhängen.

Grundsätzlich ist eine sehr hohe Pulsationsfrequenz wünschenswert. Jedoch ist bei Pulsationsfrequenzen oberhalb von 10 kHz zu beachten, daß besondere Abschirmmaßnahmen notwendig sind, um eine Störung des Radio- bzw. Funkverkehrs zu vermeiden.

## Patentansprüche

1. Verfahren zum Abbrennen von Staub, insbesondere von Ruß oder sonstigen brennbaren und elektrisch leitfähigen Stäuben,in einem elektrostatischen Staubabscheider mit einer Elektrodenanordnung, welche zur Erzeugung eines von staub- bzw. rußhaltigen Abgasen - insbesondere zur Agglomeration von Staub- bzw. Rußteilchen - durchströmten elektrischen Feldes in einer vom Abgas durchsetzten Kammer angeordnet ist, deren Wandung als Elektrode der einen Polarität geschaltet sein kann, und deren Elektroden entgegengesetzter Polarität durch Isolatoren voneinander getrennt sind, von denen anhaftender Staub diskontinuierlich abbrennbar ist, dadurch gekennzeichnet, daß der Staub bzw. Ruß durch Erzeugung von Lichtbögen zwischen den von Isolatoren getrennten Elektroden (1,4) abgebrannt wird, wobei die Lichtbögen mittels eines pulsierenden elektrischen Stromes, insbesondere Gleichstromes, unterhalten werden.

2. Verfahren nach Anspruch 1, dadurch gekennzeichnet, daß die Amplitude der Pulsationen größenordnungsmäßig bei etwa einem Drittel des mittleren Spannungspegels des pulsierenden Gleichstromes liegt.

3. Verfahren nach einem der Ansprüche 1 oder 2, dadurch gekennzeichnet, daß die Frequenz der Pulsationen bei mindestens 5 kHz liegt.

4. Verfahren nach einem der Ansprüche 1 bis 3, dadurch gekennzeichnet, daß die Pulsationen ein breitbandiges Spektrum bzw. Oberwellen aufweisen.

5. Staubabscheider zur Durchführung des Verfahrens nach einem der Ansprüche 1 bis 4, dadurch gekennzeichnet, daß die Elektroden (1,4) mit einer elektrischen Speiseschaltung verbunden sind, welche bei hohem elektrischen Widerstand zwischen den Elektroden entgegengesetzter Polarität bzw. bei geringer oder verschwindender Last als Gleichspannungsquelle arbeitet und zwischen den Elektroden eine hohe elektrische Potentialdifferenz (z.B. über 10 000 V) aufrechterhält und bei abfallendem oder verschwindendem elektrischen Widerstand bzw. bei hoher Last als pulsierende Stromquelle arbeitet und zwischen den Elektroden nur eine stark verminderte mittlere Potentialdifferenz (z.B. ca. 1 000 V) aufrechterhält.

6. Staubabscheider nach Anspruch 5 dadurch gekennzeichnet, daß eine hochfrequente Wechselspannungsquelle eine ausgangsseitig mit den Elektroden verbundene Gleichrichter- und Spannungsvervielfacherstufe speist, deren Kondensatoren eine so geringe Kapazität aufweisen, daß die die Gleichrichter- und Spannungsvervielfacherstufe speisende Wechselspannung eine Pulsation der ausgangsseitigen Spannung bewirkt, wenn die Ausgangsseite der Gleichrichter- und Spannungsvervielfacherstufe stark belastet wird bzw. der elektrische Widerstand zwischen den Elektroden abfällt.

7. Staubabscheider nach einem der Ansprüche 5 und 6 dadurch gekennzeichnet, daß zusätzlich eine Mikrowellenheizung vorhanden ist, um Verschmutzungen der Isolatoren (2,5) durch Mikrowellenheizung und durch Lichtbögen zwischen den von den Isolatoren getrennten Elektroden abzubrennen.

## Claims

1. Method of burning off dust, especially soot or other combustible and electrically conducting dusts, in an electrostatic dust separator comprising an electrode assembly, which is disposed, for the purpose of creating an electrical field through which dust-containing or soot-containing waste gases pass, especially for the agglomeration of dust and soot particles, in a chamber through which the waste gas flows, the wall of which chamber may be connected as an electrode of the one polarity, and the electrodes of which, of opposite polarity, are separated from one another by insulators, from which adhering dust can be intermittently burnt off, characterized in that the dust or soot is burnt off by creating electric arcs between the electrodes (1, 4), separated by insulators, the electric arcs being maintained by means of a pulsating electrical current, especially direct current.

2. Method according to Claim 1, characterized in that the amplitude of the pulsations is of the order of one-third of the mean voltage level of the pulsating direct current.

3. Method according to one of Claims 1 or 2, characterized in that the frequency of the pulsations is at least 5 kHz.

4. Method according to one of Claims 1 to 3, characterized in that the pulsations have a wide-band spectrum or harmonics.

5. Dust separator for carrying out the method according to one of Claims 1 to 4, characterized in that the electrodes (1, 4) are connected to an electrical supply circuit which, at a high electrical resistance between the electrodes of opposite polarity or at a low or vanishing load, operates as a direct voltage source and maintains a high electrical potential difference (e.g. above 10.000 V) between the electrodes and, if the electrical resistance falls or vanished or if the load is high, operates as a pulsating electrical source and maintains, between the electrodes, only a greatly decrease mean potential difference (e.g. approx. 1,000 V).

6. Dust separator according to claim 5, characterized in that a high-frequency alternating voltage source supplies a rectifier and voltage multiplier stage connected at its output side with the electrodes, of which stage the capacitors have sufficiently small capacitance for the alternating voltage that supplies the rectifier and voltage multiplier stage to create a pulsation of the output-side voltage when the ouput side of the rectifier and voltage multiplier stage is heavily loaded or the electrical resistance between the electrodes falls off.

7. Dust separator according to one of Claims 5 and 6, characterized in that, in addition, a microwave heater is present, in order to burn off pollution of the insulators (2, 5) by microwave heating and by electric arcs between the electrodes separated by the insulators.


**Revendications**

1. Procédé pour brûler de la poussière, en particulier de la suie ou d'autres poussières combustibles et électriquement conductrices, dans un séparateur de poussière électrostatique équipé d'un système d'électrodes qui, pour la génération d'un champ électrique traversé par des gaz d'échappement chargés de poussière et respectivement de suie - en particulier pour l'agglomération des particules de poussière et respectivement de suie - est disposé dans une chambre de tourbillonnement traversée par les gaz d'échappement dont la paroi peut être montée en tant qu'électrode de l'une des polarités et dont les électrodes de polarité opposée sont séparées les unes des autres par des isolateurs et sur lesquelles la poussière adhérente peut être brûlée de manière discontinue, **caractérisé en ce** que la poussière et respectivement la suie est brûlée par la génération d'arcs électriques entre les électrodes (1, 4) de différentes polarités séparées par des isolateurs, les arcs électriques étant entretenus au moyen d'un courant électrique pulsé, en particulier d'un courant continu.

2. Procédé selon la revendication 1, caractérisé en ce que l'ordre de grandeur de l'amplitude des pulsations correspond sensiblement à un tiers du niveau de tension moyen du courant continu pulsé.

3. Procédé selon l'une des revendications 1 ou 2, caractérisé en ce que la fréquence des pulsations est d'au moins 5 kHz.

4. Procédé selon l'une des revendications 1 à 3, caractérisé en ce que les pulsations présentent un spectre à large bande et respectivement des harmoniques.

5. Séparateur de poussière pour la mise en oeuvre du procédé selon l'une des revendications 1 à 4, **caractérisé en ce** que les électrodes (1, 4) sont reliées à un circuit d'alimentation électrique qui fonctionne, avec une grande résistance électrique entre les électrodes de polarité opposées et respectivement à une charge faible ou infime, comme source de tension continue et entretient entre les électrodes une grande différence de potentiel électrique (par exemple supérieure à 10 000 V), mais qui, avec une résistance électrique décroissante ou infime et respectivement avec une charge élevée, travaille comme source de courant pulsé et ne maintient entre les électrodes qu'une différence de potentiel moyenne fortement diminuée (par exemple environ 1 000 V).

6. Séparateur de poussière selon la revendication 5, caractérisé en ce qu'une source de tension alternative à haute fréquence alimente un étage de redressement et de multiplication de tension relié, du côté sortie, aux électrodes, dont les condensateurs présentent une capacité tellement faible que la tension alternative alimentant l'étage de redressement et de multiplication de tension provoque une pulsation de la tension de sortie lorsque le côté sortie de l'étage de redressement et de multiplication de tension est fortement chargé ou que la résistance électrique entre les électrodes diminue.

7. Séparateur de poussière selon l'une des revendications 5 et 6, caractérisé en ce qu'il comprend, en plus, un chauffage par micro-ondes pour brûler des encrassements sur les isolateurs (2, 5) par le chauffage par micro-ondes et par les arcs électriques entre les électrodes séparées par les isolateurs.

FIG. 1

FIG. 2

EP 0 327 799 B1

FIG. 3